# EUROPEAN PATENT APPLICATION

(11) **EP 2 824 979 A1**
(43) Date of publication of application: **14.01.2015**
(21) Application number: 13757071.9
(22) Date of filing: 05.03.2013
(51) Int. Cl.: H04W 56/00, H04W 16/32

(54) **WIRELESS BASE STATION**

(30) Priority: 06.03.2012 JP 2012049822
(71) Applicant: NTT DOCOMO, INC., Chiyoda-ku Tokyo 100-6150 (JP)
(72) Inventor: UCHINO, Tooru, Tokyo 100-6150 (JP); UMESH, Anil, Tokyo 100-6150 (JP); TAKAHASHI, Hideaki, Tokyo 100-6150 (JP); YAGYU, Kengo, Tokyo 100-6150 (JP)
(74) Representative: Hoffmann Eitle
(86) International application number: PCT/JP2013/055922
(87) International publication number: WO 2013/133249

(57) **Abstract**

Uplink interference is suppressed between a mobile station (UE#1) performing TA control using "TA" in a cell (#1) and a mobile station (UE#2) performing TA control using "TA" in a cell (#11). In a radio base station (eNB) of the present invention, a reception unit (21) calculates "TA_{macro}" on the basis of a propagation delay (T_{pd,macro}) in the cell i#1), which is a temporal difference between a transmission timing of a first uplink signal at the mobile station (UE#1) and a reception timing of the first uplink signal at the radio base station (eNB). A transmission unit (22) is configured to transmit, as "TA_{pico}", a sum of the "TA_{pico}" and "DL/UL OFFSET_{pico}" that is an offset value between a propagation delay (T_{pd,pico}) in the cell (#11) and the propagation delay (T_{pd,macro}) in the cell (#1). Here, the propagation delay (T_{pd,pico}) is a temporal difference between a transmission timing of a second uplink signal at the mobile station (UE#2) and a reception timing of the second uplink signal at the radio base station (eNB).

## Description

### TECHNICAL FIELD

The present invention relates to a radio base station.

### BACKGROUND ART

Implementation of "CA (Carrier Aggregation)" in an LTE (Long Term Evolution)-Advanced mobile communication system, which is in the process of standardization by 3GPP, has currently been studied.

In the LTE-Advanced mobile communication system, a mobile station UE is configured to be capable of performing the CA with one radio base station eNB by simultaneously using multiple "Component Carriers (CCs)" in different frequency bands.

Meanwhile, when the CA is performed, the mobile station UE is configured to set one of the multiple CCs as a PCC (Primary Component Carrier) and to set the rest as SCCs (Secondary Component Carriers) in response to an instruction from the radio base station.

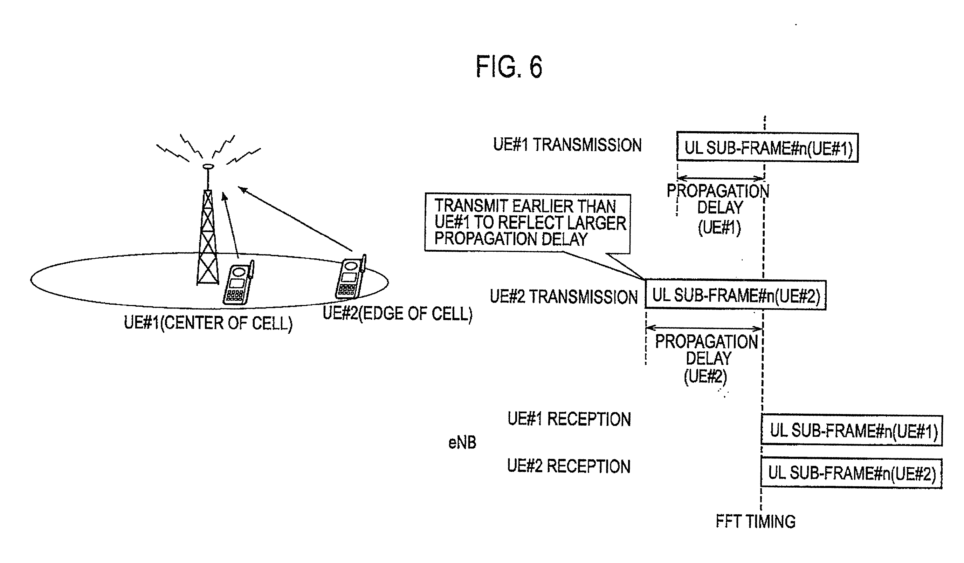

Moreover, as shown in Fig. 6, in order to align FFT (First Fourier Transform) timings (timings for demodulation processing) of uplink signals at a radio base station eNB, which are transmitted by a mobile station UE#1 located in the center of a cell and a mobile station UE#2 located at an edge of the cell, the LTE-Advanced mobile communication system is configured to perform "UL Timing Alignment (TA control)" to control transmission timings of the uplink signals from the mobile stations UE#1 and UE#2 in accordance with propagation delays between the radio base station eNB and the mobile station UE#1 as well as between the radio base station eNB and the mobile station UE#2.

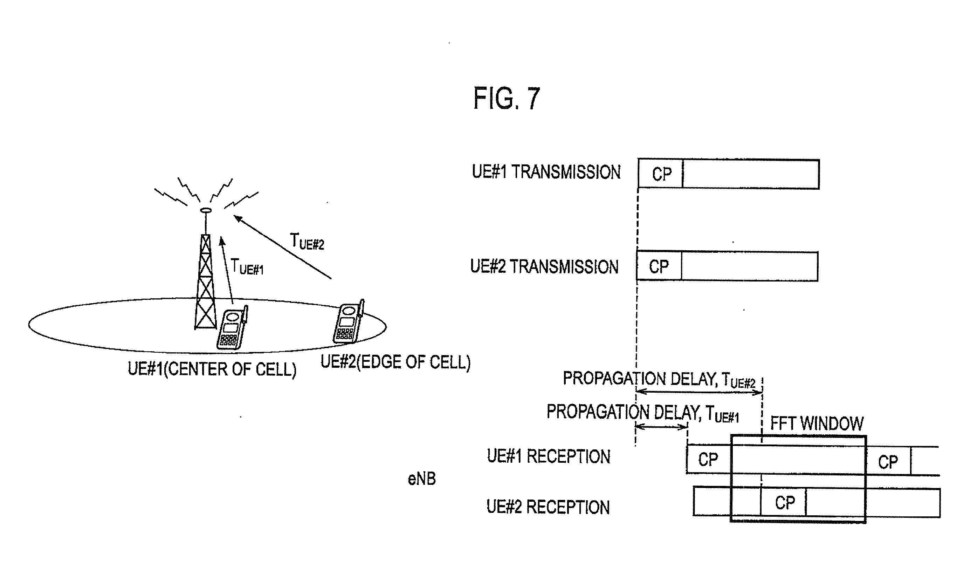

Here, as shown in Fig. 7, when the mobile stations UE#1 and UE#2 transmit the uplink signals at the same timing as a reception timing of downlink signals, a difference in the FFT timing occurs on the radio base station eNB side because a propagation delay T_{UE#1} between the radio base station eNB and the mobile station UE#1 is different from a propagation delay T_{UE#2} between the radio base station eNB and the mobile station UE#2.

Then, if the difference at the radio base station eNB between the FFT timing concerning the mobile station UE#1 and the FFT timing concerning the mobile station UE#2 becomes equal to or above a CP (Cyclic Prefix) length, interference occurs between the mobile station UE#1 and the mobile station UE#2 due to a failure to maintain intra-cell orthogonality.

Accordingly, the TA control has to be performed as described above since it is necessary to perform the control in such a way as to bring the difference between the FFT timing concerning the mobile station UE#1 and the FFT timing concerning the mobile station UE#1 at the radio base station eNB equal to or below the CP length by setting the transmission timings of the uplink signals from the mobile stations UE#1 and UE#2 in consideration of the propagation delay T_{UE#1} between the radio base station eNB and the mobile station UE#1 as well as the propagation delay **T**_{UE#**2**} between the radio base station eNB and the mobile station UE#2.

### PRIOR ART DOCUMENTS

### NON-PATENT DOCUMENTS

Non-patent document 1: 3GPP 36.300
Non-patent document 2: 3GPP 36.321

### SUMMARY OF THE INVENTION

As described above, the TA control should be performed for each cell in such a way as to align the reception timings at the radio base station eNB of the uplink signals from the respective mobile stations UE.

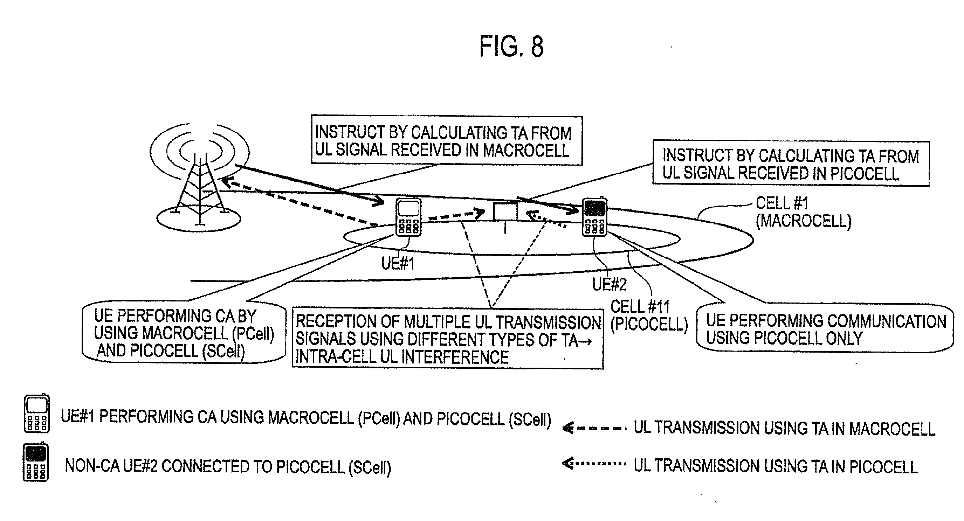

At present, in the LTE-Advanced mobile communication system, adoption of HetNet architecture, which is designed to locate a cell #11 (a picocell) in a high-traffic area within a coverage area of a cell #1 (a macrocell) as shown in Fig. 8, has currently been studied.

For instance, when the mobile station UE#1 performs the CA (such as setting the cell #1 as a "Pcell" and setting the cell #11 as an "Scell") in the HetNet architecture, the cell #1 and the cell #11 should be subjected to the TA control separately because the reception timing at the radio base station eNB of the uplink signal transmitted from the mobile station UE#1 via the cell #1 is different from the reception timing at the radio base station eNB of the uplink signal transmitted from the mobile station UE#1 via the cell #11 due to the difference in the propagation delay.

Meanwhile, when the mobile station UE performs the CA in different frequency bands, it is more preferable to perform the individual TA control because a difference in radio characteristic is involved as well.

However, the existing LTE-Advanced mobile communication system is merely designed to perform the single TA control in the Pcell on the mobile station UE that is performing the CA.

Therefore, as shown in Fig. 8, the mobile station UE#1 performing the CA by using the cell #1 (the macrocell) and the cell #11 (the picocell) determines the transmission timing of the uplink signal in the "Scell (the cell #11)" by using the "TA" in the "Pcell (the cell #1)." As a consequence, there is a problem that a deviation of the transmission timings of the uplink signals occurs between the mobile station UE#1 and the mobile station UE#2 that determines the transmission timing of the uplink signal in the cell #11 by using the "TA" in the cell #11, and such a deviation leads to uplink interference in the cell #11.

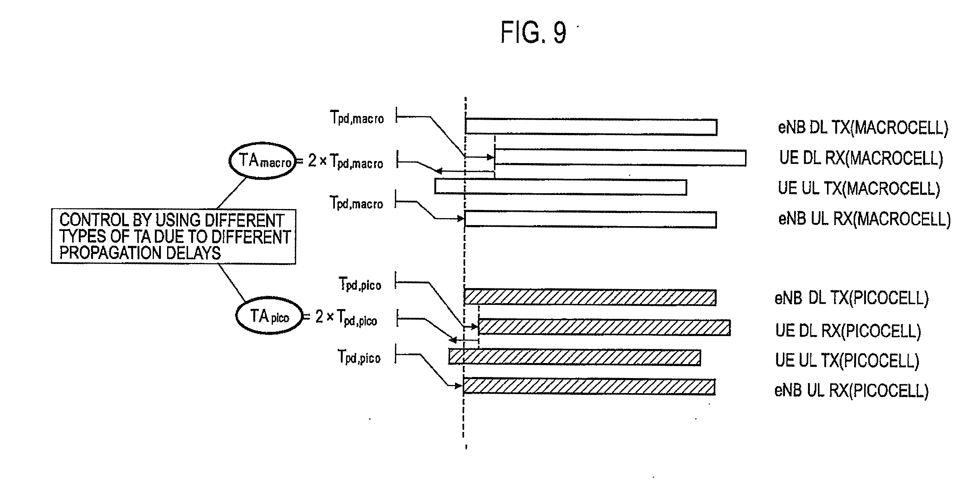

In order to align the reception timing at the radio base station eNB of the uplink signal transmitted by the mobile station UE#1 via the cell #1 with the reception timing at the radio base station eNB of the uplink signal transmitted by the mobile station UE#1 via the cell #11 in the HetNet architecture described above, it is necessary to perform different types of the TA control on the mobile station UE in terms of the cell #1 and the cell #11 (TA control using "TA_{macro}" and TA control using "TA_{pico}") as shown in Fig. 9.

However, as described previously, the existing LTE-Advanced mobile communication system cannot perform the different types of the TA control on the mobile station UE, which is performing the CA, in terms of the cell #1 and the cell #11.

The present invention has been made in view of the problem described above and an objective thereof is to provide a radio base station in the mobile communication system that can perform only the single TA control in the "Pcell" on the mobile station UE performing the CA. Here, the radio base station is capable of suppressing uplink interference between the mobile station UE#1 performing the TA control by using the "TA" in the cell #1 and the mobile station UE#2 performing the TA control by using the "TA" in the cell #11.

A first feature of the present invention is summarized as a radio base station configured to manage a first cell and a second cell, including: a reception unit configured to receive a first uplink signal transmitted by a first mobile station using the first cell as a serving cell, and a second uplink signal transmitted by a second mobile station using the second cell as a serving cell; and a transmission unit configured to transmit a first timing adjustment value to the first mobile station and to transmit a second timing adjustment value to the second mobile station, wherein the reception unit is configured to calculate the first timing adjustment value on the basis of a propagation delay in the first cell being a temporal difference between a transmission timing of the first uplink signal at the first mobile station and a reception timing of the first uplink signal at the radio base station, and the transmission unit is configured to transmit, as the second timing adjustment value, a sum of the second timing adjustment value and an offset value between a propagation delay in the second cell and the propagation delay in the first cell, the propagation delay in the second cell being a temporal difference between a transmission timing of the second uplink signal at the second mobile station and a reception timing of the second uplink signal at the radio base station.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a view for explaining transmission and reception timings of signals at the mobile station and a radio base station according to the first embodiment of the present invention.
[Fig. 4] Fig. 4 is a functional block diagram of the radio base station according to the first embodiment of the present invention.
[Fig. 5] Fig. 5 is a flowchart for explaining an operation of the radio base station according to the first embodiment of the present invention.
[Fig. 6] Fig. 6 is a diagram for explaining a conventional mobile communication system.
[Fig. 7] Fig. 7 is a diagram for explaining the conventional mobile communication system.
[Fig. 8] Fig. 8 is a diagram for explaining the conventional mobile communication system.
[Fig. 9] Fig. 9 is a diagram for explaining the conventional mobile communication system.

### MODE FOR CARRYING OUT THE INVENTION

### (Mobile Communication System According to First Embodiment of Present Invention)

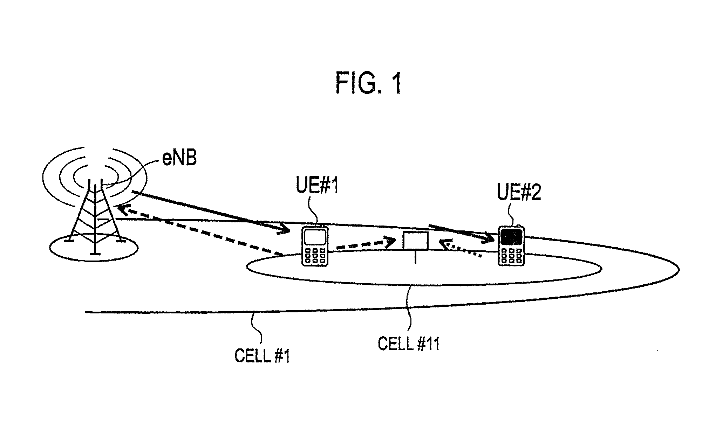

A mobile communication system according to a first embodiment of the present invention will be described with reference to Fig. 1 to Fig. 5. The mobile communication system of the embodiment is an LTE-Advanced mobile communication system.

In the example of Fig. 1, a mobile station UE#1 in the mobile communication system of the present embodiment is assumed to be performing transmission and reception of signals to and from a radio base station eNB by simultaneously using a cell #1 and a cell #11, i.e., to be performing the CA.

As shown in Fig. 1, in the mobile communication system of the present embodiment, the cell #1 is provided as a macrocell and the cell #11 is provided as a picocell, which are under control of the radio base station eNB.

For example, a CC in a frequency band F1 is used in the cell #1 (the macrocell) and a CC in a frequency band F2 is used in the cell #11 (the picocell).

As shown in Fig. 1, for example, a core (coverage) band placing emphasis on an area coverage range is assumed to be used as the frequency band F1, and a capacity band placing emphasis on high-speed communication is assumed to be used as the frequency band F2.

For instance, the 800 MHz band, the 2 GHz band, and the like may be used as the frequency band F1 while the 3.5 GHz band and the like may be used as the frequency band F2.

Meanwhile, the bandwidth of each CC may be any one of 6 RB (Recourse Blocks), 15 RB, 25 RB, 50 RB, 75 RB, and 100 RB, for example. Here, 1 RB is equivalent to 180 kHz.

Moreover, in the mobile communication system of the present embodiment, a coverage area of the cell #1 and a coverage area of the cell #11 are designed to geographically overlap each other.

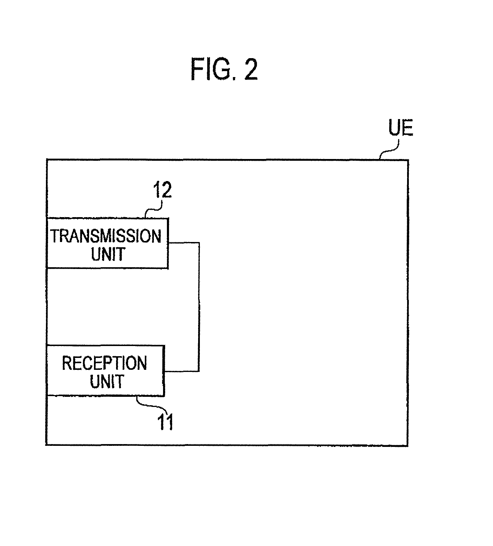

A configuration of the mobile station UE#1 is basically the same as a configuration of a mobile station UE#2. Accordingly, the mobile station UE#1 and the mobile station UE#2 will be hereinafter collectively referred to and described as a mobile station UE. As shown in Fig. 2, the mobile station UE includes a reception unit 11 and a transmission unit 12.

The reception unit 11 is configured to receive various signals from the radio base station eNB with which the mobile station UE is performing communication. For example, the reception unit 11 is configured to receive a downlink signal from the radio base station eNB. In addition, the reception unit 11 is configured to receive "TA" from the radio base station eNB.

For example, when the mobile station UE is performing the communication by using the cell #1 as a "Pcell," the reception unit 11 is configured to receive "TA_{macro}" from the radio base station eNB.

On the other hand, when the mobile station UE is performing the communication by using the cell #11 as the "Pcell," the reception unit 11 is configured to receive "TA_{pico}" from the radio base station eNB.

The transmission unit 12 is configured to transmit various signals to the radio base station eNB with which the mobile station UE is performing communication. For example, the transmission unit 12 is configured to transmit an uplink signal to the radio base station eNB.

Here, the transmission unit 12 is configured to perform TA control (transmission timing control) by using single "TA."

For example, when the mobile station UE is performing the CA by setting the cell #1 as the "Pcell" and setting the cell #11 as an "Scell," the transmission unit 12 is configured to perform the TA control in the cell #1 and the cell #11 by using the "TA_{macro}" received by the reception unit 11.

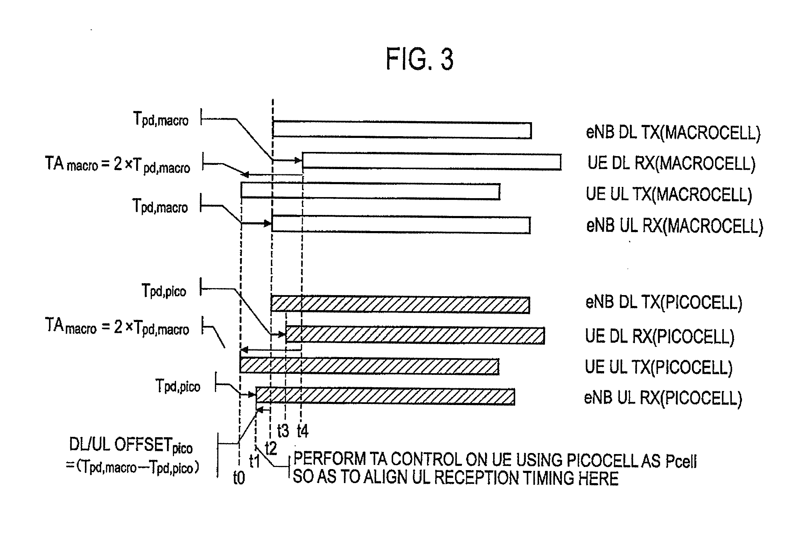

Specifically, as shown in an example of Fig. 3, the transmission unit 12 may be configured to determine a timing t0, which is earlier just by the "TA_{macro}" than a timing t4 to receive the downlink signal with the reception unit 11, as the transmission timing of the uplink signals in the cell #1 and the cell #11.

In the meantime, when the mobile station UE is performing the communication by using the cell #11 as the "Pcell," the transmission unit 12 is configured to perform the TA control in the cell #11 by using the "TA_{pico}" received by the reception unit 11.

Specifically, as shown in the example of Fig. 3, the transmission unit 12 may be configured to determine a timing t1, which is earlier just by the "TA_{pico}" than a timing t3 to receive the downlink signal with the reception unit 11, as the transmission timing of the uplink signal in the cell #11.

Here, a propagation delay T_{pd,pico} in the cell #11 is a temporal difference in the cell #11 between a transmission timing of an uplink signal at the mobile station UE and a reception timing of the uplink signal at the radio base station eNB.

Meanwhile, a propagation delay T_{pd,macro} in the cell #1 is a temporal difference in the cell #1 between a transmission timing of an uplink signal at the mobile station UE and a reception timing of the uplink signal at the radio base station eNB.

Here, when the mobile station UE is performing the CA by setting the cell #1 as the "Pcell" and setting the cell #11 as the "Scell," the transmission unit 12 may be configured to calculate "DL/UL OFFSET_{pico}," which is an offset value between the propagation delay T_{pd,pico} in the cell #11 and the propagation delay T_{pd,macro} in the cell #1, and to notify the radio base station eNB of the "DL/UL OFFSET_{pico}."

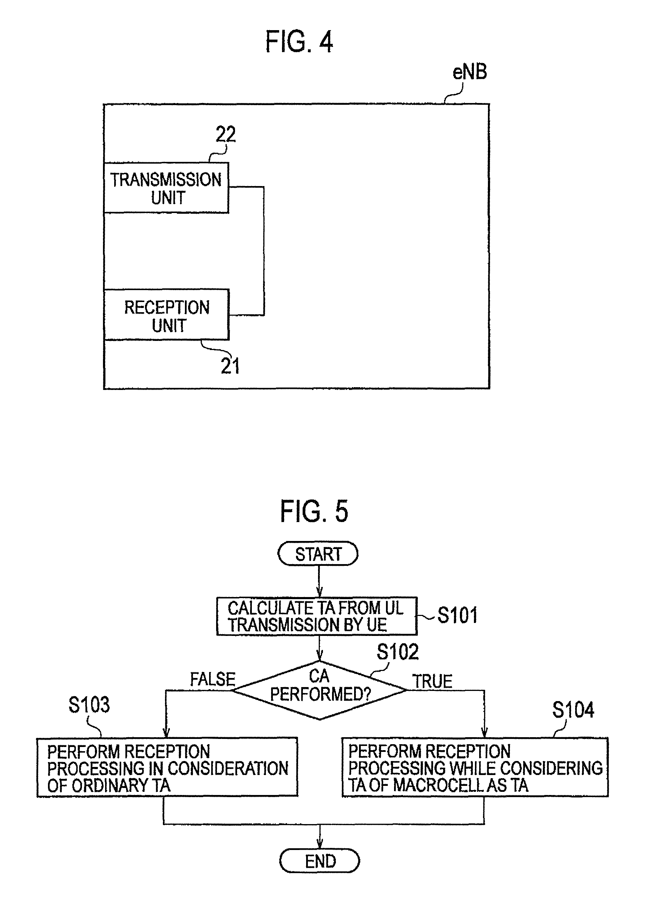

As shown in Fig. 4, the radio base station eNB includes a reception unit 21 and a transmission unit 22.

The reception unit 21 is configured to receive various signals from the mobile station UE which is performing the communication in the cell under control of the radio base station eNB.

For example, the reception unit 21 is configured to receive an uplink link signal (a first uplink signal) transmitted by the mobile station UE#1 which uses the cell #1 as a serving cell, an uplink link signal (a second uplink signal) transmitted by the mobile station UE#2 which uses the cell #11 as a serving cell, and the like.

Here, the reception unit 21 is configured to calculate the above-described "TA_{macro}" on the basis of the propagation delay T_{pd,macro} in the cell #1, which is the temporal difference between the transmission timing of the uplink signal at the mobile station UE#1 and the reception timing of the uplink signal at the radio base station eNB.

In this case, as shown in Fig. 3, the "TA_{macro}" is twice as large as the propagation delay T_{pd,macro} in the cell #1.

Meanwhile, when there is no mobile station UE performing the CA by using any of the cell #1 and the cell #11, the reception unit 21 is configured to calculate the above-described "TA_{pico}" on the basis of the propagation delay T_{pd,pico} in the cell #11, which is the temporal difference between the transmission timing of the uplink signal at the mobile station UE#2 and the reception timing of the uplink signal at the radio base station eNB.

In this case, as shown in Fig. 3, the "TA_{pico}" is twice as large as the propagation delay T_{pd,pico} in the cell #11.

On the other hand, when there is the mobile station UE performing the CA by using the cell #1 and the cell #11, the reception unit 21 is configured to calculate the "DL/UL OFFSET_{pico}," which is the offset value between the propagation delay T_{pd,pico} in the cell #11 and the propagation delay T_{pd,macro} in the cell #1.

In this case, as shown in Fig. 3, the "DL/UL OFFSET_{pico}" is calculated by "T_{pd,macro} - T_{pd,pico}."

For example, of multiple reception units 21, the "DL/UL OFFSET_{pico}" may be calculated by the reception unit 21 for the cell #1 or the reception unit 21 for the cell #11.

Here, the reception unit 21 may be configured to acquire the above-mentioned "DL/UL OFFSET_{pico}" from the mobile station UE#1 or the mobile station UE#2.

The transmission unit 22 is configured to transmit various signals to the mobile station UE which is performing the communication in the cell under control of the radio base station eNB.

For example, the transmission unit 22 is configured to transmit the "TA_{macro}" to the mobile station UE#1, and to transmit the "TA_{pico}" to the mobile station UE#2.

Here, when there is the mobile station UE performing the CA by using the cell #1 and the cell #11, the transmission unit 22 is configured to transmit a sum of the "DL/UL OFFSET_{pico}" and the "TA_{pico}" described above as the "TA_{pico}."

Note that in 3GPP, it is defined that the temporal difference between the transmission timing of the downlink signal in the cell #1 and the transmission timing of the downlink signal in the cell #1 should be set within "1.3 ms."

An operation of the mobile communication system of the present embodiment, namely, an operation of the radio base station eNB of the present embodiment will be described with reference to Fig. 5.

As shown in Fig. 5, in step S101, the radio base station eNB calculates the "TA_{macro}" and the "TA_{pico}" described above from the uplink signals transmitted by the mobile station UE#1 and the mobile station UE#2.

In step S102, the radio base station eNB judges whether or not there is the mobile station UE performing the CA by using the cell #1 and the cell #11.

The operation proceeds to step S103 when it is judged that there is no mobile station UE performing the CA by using the cell #1 and the cell #11. The operation proceeds to step S104 when it is judged that there is the mobile station UE performing the CA by using the cell #1 and the cell #11.

In step S103, the radio base station eNB transmits the "TA_{macro}" and the "TA_{pico}" described above to the mobile station UE#1 and the mobile station UE#2, and performs reception processing at the reception timings based on the "TA_{macro}" and the "TA_{pico}."

On the other hand, in step S104, the radio base station eNB transmits the above-described "TA_{pico}" to the mobile station UE#1, then transmits the sum of the "DL/UL OFFSET_{pico}" and the "TA_{pico}" as the "TA_{pico}" in place of the above-described "TA_{pico}," to the mobile station UE#2 and performs the reception processing at the reception timings based on the "TA_{macro}" and the "DL/UL OFFSET_{pico}."

According to the mobile communication system of the first embodiment of the present invention, the radio base station eNB is configured to transmit to the mobile station UE#2, the sum of the "DL/UL OFFSET_{pico}" and the "TA_{pico}" as the "TA_{pico}" when there is the mobile station UE performing the CA by using the cell #1 and the cell #11. Thus, it is possible to set the reception timing (an FFT timing) of the uplink signal from the mobile station UE#1 and the reception timing (an FFT timing) of the uplink signal from the mobile station UE#2 equal to or below a CP length, and thereby to reduce a probability of occurrence of interference.

The features of the above-described embodiment may also be expressed as follows.

A first feature of this embodiment is summarized as a radio base station eNB configured to manage a cell #1 (a first cell) and a cell #11 (a second cell), including: a reception unit 21 configured to receive a first uplink signal transmitted by a mobile station UE#1 (a first mobile station) using the cell #1 as a serving cell, and a second uplink signal transmitted by a mobile station UE#2 (a second mobile station) using the cell #11 as a serving cell; and a transmission unit 22 configured to transmit a "TA_{macro} (a first timing adjustment value)" to the mobile station UE#1 and to transmit a "TA_{pico} (a second timing adjustment value)" to the mobile station UE#2. Here, the reception unit 21 is configured to calculate the "TA_{macro}" on the basis of a propagation delay T_{pd,macro} in the cell #1 being a temporal difference between a transmission timing of the first uplink signal at the mobile station UE#1 and a reception timing of the first uplink signal at the radio base station eNB, and the transmission unit 22 is configured to transmit, as the "TA_{pico}," a sum of the "TA_{pico}" and an "DL/UL OFFSET_{pico}" which is the offset value between a propagation delay T_{pd,pico} in the cell #11 and the propagation delay T_{pd,macro} in the cell #1, the propagation delay T_{pd,pico} in the cell #11 being a temporal difference between a transmission timing of the second uplink signal at the mobile station UE#2 and a reception timing of the second uplink signal at the radio base station eNB.

In the first feature of this embodiment, the reception unit 21 may be configured to acquire the "DL/UL OFFSET_{pico}" from the mobile station UE#1 or the mobile station UE#2.

In the first feature of this embodiment, of a plurality of the reception units 21, the reception unit 21 for the cell #1 may be configured to calculate the "DL/UL OFFSET_{pico}."

In the first feature of this embodiment, of a plurality of the reception units 21, the reception unit 21 for the cell #2 may be configured to calculate the "DL/UL OFFSET_{pico}" which is the offset value.

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-049822 (filed on March 6, 2012) is incorporated by reference in the present specification.

### INDUSTRIAL APPLICABILITY

As described above, according to the present invention, it is possible to provide the radio base station in the mobile communication system that can perform only the single TA control in the "Pcell" on the mobile station UE performing the CA, in which the radio base station is capable of suppressing uplink interference between the mobile station UE#1 performing the TA control by using the "TA" in the cell #1 and the mobile station UE#2 performing the TA control by using the "TA" in the cell #11.

### EXPLANATION OF THE REFERENCE NUMERALS

- eNB: radio base station
- 11, 21: reception unit
- 12, 22: transmission unit

## Claims

1. A radio base station configured to manage a first cell and a second cell, comprising:
a reception unit configured to receive a first uplink signal transmitted by a first mobile station using the first cell as a serving cell, and a second uplink signal transmitted by a second mobile station using the second cell as a serving cell; and
a transmission unit configured to transmit a first timing adjustment value to the first mobile station and to transmit a second timing adjustment value to the second mobile station, wherein
the reception unit is configured to calculate the first timing adjustment value on the basis of a propagation delay in the first cell being a temporal difference between a transmission timing of the first uplink signal at the first mobile station and a reception timing of the first uplink signal at the radio base station, and
the transmission unit is configured to transmit, as the second timing adjustment value, a sum of the second timing adjustment value and an offset value between a propagation delay in the second cell and the propagation delay in the first cell, the propagation delay in the second cell being a temporal difference between a transmission timing of the second uplink signal at the second mobile station and a reception timing of the second uplink signal at the radio base station.

2. The radio base station according to claim 1, wherein the reception unit is configured to acquire the offset value from the first mobile station or the second mobile station.

3. The radio base station according to claim 1, wherein, of a plurality of the reception units, the reception unit for the first cell is configured to calculate the offset value.

4. The radio base station according to claim 1, wherein, of a plurality of the reception units, the reception unit for the second cell is configured to calculate the offset value.

5. The radio base station according to any one of claims 1 to 4, wherein
the first cell is a macrocell, and
the second cell is a picocell.
